(19) Europäisches Patentamt
European Patent Office
Office européen des brevets

(11) EP 2 618 115 A2

(12) **EUROPÄISCHE PATENTANMELDUNG**

(43) Veröffentlichungstag:
24.07.2013 Patentblatt 2013/30

(51) Int Cl.:
*G01F 1/68* (2006.01)

(21) Anmeldenummer: 13000135.7

(22) Anmeldetag: 11.01.2013

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME

(30) Priorität: 18.01.2012 DE 102012000921
27.01.2012 DE 102012001573

(71) Anmelder: Hydrometer GmbH
91522 Ansbach (DE)

(72) Erfinder:
• Sosna, Christoph
91522 Ansbach (DE)
• Sonnenberg, Hans-Michael
91522 Ansbach (DE)

(74) Vertreter: Diehl Patentabteilung
c/o Diehl Stiftung & Co. KG
Stephanstrasse 49
90478 Nürnberg (DE)

(54) **Verfahren und Vorrichtung zum Messen einer Durchflussmenge eines strömenden Gases**

(57) Verfahren zum Messen einer Durchflussmenge eines strömenden Gases, insbesondere eines Masse- oder Volumenflusses eines Gases, mittels eines Durchflussgeräts, umfassend wenigstens eine wenigstens eine Messstrecke aufweisende Sensoranordnung mit wenigstens einem gasstromaufwärts und wenigstens einem gasstromabwärts angeordneten Sensor, über welche Sensoranordnung das zu vermessende Gas geführt wird, wobei unter konstantem Durchfluss des Gases über eine Recheneinrichtung zur Berechnung der Durchflussmenge von der wenigstens einen Sensoranordnung gelieferte und ein Maß für die Durchflussmenge darstellende Ausgangssignale, welche eine Funktion verschiedener Parameter des Gases und der Komponenten des Durchflussmessgeräts darstellen, zu einem ein Maß für die Durchflussmenge angebenden Messergebnis verarbeitet werden, wobei von der Recheneinrichtung aus den Parametern der Ausgangssignale gleichartige, nicht lineare oder voneinander unabhängige Parameter ausgewählt und in ein Verhältnis gesetzt werden, aus welchem Verhältnis unter Rückgriff auf eine mit der Recheneinrichtung verbundene Datenbank enthaltend Daten vorgegebener Gasmischungen qualitativ oder quantitativ die Gasmischung ermittelt wird, in Abhängigkeit welcher Gasmischung das von der Recheneinrichtung errechnete, ein Maß für die Durchflussmenge angebende Messergebnis des Gasflusses unter Berücksichtigung der Gasmischung korrigiert wird.

FIG. 2

EP 2 618 115 A2

**Beschreibung**

Die Erfindung betrifft ein Verfahren zum Messen einer Durchflussmenge eines strömenden Gases, insbesondere eines Masse- oder Volumenflusses eines Gases, mittels eines Durchflussmessgeräts.

Bei der thermischen Strömungsmessung wird der Massefluss eines Gases gemessen, über den sich auf den Volumenfluss schließen lässt. Das Ausgangssignal ist dabei nicht nur abhängig von der Umgebungstemperatur und - in gewissen Grenzen - dem Druck des Gases, sondern allgemein auch von der Gasmischung bzw. Gaszusammensetzung des strömenden Gases. Der Einfluss der Gasmischung bzw. Gaszusammensetzung kann bisher nicht in der geforderten Genauigkeit bestimmt werden, um das Ausgangssignal der Sensoren dahingehend eindeutig und insbesondere für alle vorkommenden Gaszusammensetzungen, insbesondere Erdgaszusammensetzungen, bzw. Gasgemische oder Gasmischungen zu korrigieren.

Bei miniaturisierten thermischen Durchflussmessgeräten wird der Massefluss über eine durch das strömende Fluid verursachte Temperaturverschiebung erfasst. Hierfür umfassen die Durchflussmessgeräte allgemein ein Heizelement und eine Sensoranordnung mit wenigstens einem gasstromaufwärts und wenigstens einem gasstromabwärts angeordneten Sensor, insbesondere Temperatursensor. Die Sensoranordnung ist zur thermischen Isolation beispielsweise auf einer dünnen Membran angeordnet. Die Sensoren sind symmetrisch zum Heizelement angeordnet, und zwar in der Art, dass ein erster Temperatursensor stromaufwärts (upstream), das heißt bezogen auf die Strömungseinrichtung vor dem Heizelement, und ein zweiter Sensor stromabwärts (downstream), das heißt bezogen auf die Strömungseinrichtung hinter dem Heizelement, platziert ist.

Die Differenz der Sensorsignale zwischen den Sensoren ist Null, wenn das Gas steht, also keine Gasströmung vorliegt. Kommt es zur Strömung des Gases, wird der Teil der Membran stromaufwärts stärker gekühlt als der Teil der Membran stromabwärts. Die Temperaturverteilung wird asymmetrisch und es entsteht eine Differenz der gemessenen Temperatur zwischen den beiden Sensoren. Die Differenz stellt damit das Ausgangssignal der Sensoranordnung dar und ist nicht nur abhängig vom Massefluss, sondern insbesondere auch von der Temperatur des Gases und dessen Zusammensetzung. Ist das Gas und die Temperatur bekannt, kann ohne Probleme auf den Massefluss geschlossen werden und daraus der Volumenfluss berechnet werden.

Werden allerdings Gase unbekannter bzw. unterschiedlicher Zusammensetzung gemessen, wie zum Beispiel Erdgase mit unterschiedlichen Konzentrationen von Methan, Ethan, Propan, Butan, Kohlenstoffdioxid, Sauerstoff und Wasserstoff, dann muss die Gasmischung bzw. Gaszusammensetzung bestimmt werden, um das Ausgangssignal der Sensoranordnung abhängig von der Gasmischung bzw. Gaszusammensetzung zu korrigieren.

Bekannt ist es hierfür, z.B. indirekt die thermische Leitfähigkeit des Gases zu bestimmen, wenn das Gas stillsteht, mithin nicht strömt. Dazu wird der Absolutwert einer Thermosäule betrachtet. In erster Näherung hängt die Wärmeverlustleistung der Membran unter anderem von dem diese umgebenden Gas ab. Ein Gas mit hoher thermischer Leitfähigkeit führt zum Beispiel zu einer höheren thermischen Ableitung in das Gas, womit die Temperatur der Thermosäulen sinkt. Ein Gas mit niedriger thermischer Leitfähigkeit hingegen führt zu einem höheren Thermosäulen-Signal. Die thermische Leitfähigkeit eines Gases korreliert überwiegend gut mit dessen Zusammensetzung. Daher kann die Bestimmung der Wärmeleitfähigkeit in erster Näherung zur Korrektur des Flusssignals genutzt werden.

Unter Durchfluss spielt jedoch nicht nur die thermische Leitfähigkeit, sondern auch die Wärmekapazität und die Dichte des Gases eine Rolle. Dieser Zusammenhang kann durch folgende grundlegende Wärmeverlustgleichung prinzipiell beschrieben werden:

$$\frac{\partial^2 T}{\partial x^2} + \frac{H}{\lambda} = \frac{c_p \cdot \rho}{\lambda} \cdot u \frac{\partial T}{\partial x} \quad (i)$$

mit T der Temperatur, x der Richtung des Gasflusses, $\lambda$ der thermischen Wärmeleitfähigkeit oder der thermischen Leitfähigkeit, $c_P$ der spezifischen Wärmekapazität, p der Dichte sowie u der Strömungsgeschwindigkeit des Gases. H entspricht der vom Heizelement ins System eingebrachten Heizleistung. Steht das Gas still, verschwindet der rechte Term der Gleichung und es kommt allein die thermische Leitfähigkeit $\lambda$ des Gases zum Tragen, über die Wärme von der Membran an die Umgebung abtransportiert wird. Wird das Gas in Bewegung gesetzt, kommt zusätzlich zu der Wärmeleitung erzwungene Konvektion hinzu, über die durch die Gasströmung mehr Wärme von einer geheizten Membranoberfläche abtransportiert wird.

Damit ist das Ausgangssignal thermischer Strömungssensoren bzw. der Sensoranordnung von weiteren, zueinander in Korrelation stehenden Gasparametern abhängig. Die thermische Leitfähigkeit kann sehr gut über die Ausbreitung der Wärme auf einer Membran bestimmt werden, in dem zum Beispiel die Höhe der Membrantemperatur mit Hilfe von Temperatursensoren auf dieser gemessen wird. Dieses Verfahren ist bekannt und kommt in Wärmeleitfähigkeitssensoren zum Einsatz. Auf die weiteren Gasparameter wie Dichte p und insbesondere Wärmekapazität $c_P$ bzw. im Zusammenhang mit der Wärmeleitfähigkeit $\lambda$ auf die Temperaturleitfähigkeit bzw. Diffusivität a kann nicht ohne Weiteres geschlossen werden. Dabei ist die Diffusivität a wie folgt definiert:

$$a = \frac{\lambda}{c_\rho \cdot \rho} \quad \text{(ii)}$$

Zur Bestimmung der Wärmekapazität $c_P$ bzw. der Diffusivität a werden häufig transiente Verfahren genutzt (vgl. U. Hammerschmidt, V. Meier, New Transit Hot-Bridge Sensor to Measure Thermal Conductivity, Thermal Diffusivity, and Volumetric Specific Heat, International Journal of Thermophysics, Vol. 27, No. 3, May 2006), in dem beispielsweise das zeitliche Verhalten von Temperatursensoren auf einen Heizimpuls betrachtet wird. Diese Art der Gasparameterbestimmung erfordert jedoch eine sehr komplexe Signalanalyse, da hierbei zeitliche Signale aufgenommen und analysiert werden müssen.

Nichtsdestotrotz kann über die Differentialgleichung (i) nicht einfach auf die Gasparameter geschlossen werden, die das Ausgangssignal unter Durchfluss maßgeblich beeinflussen und für eine gasartenunabhängige Durchflussmessung herangezogen werden können. Für eine genauere Aussage zu den Gasparametern, die die Ausgangskennlinie beeinflussen, muss Gleichung (i) gelöst werden.

Zur Lösung müssen allerdings weitere Terme hinzugezogen werden, um die physikalischen Vorgänge genauer zu erfassen. Zusätzlich ist es notwendig, bestimmte Randbedingungen zu erfüllen, um ein Messsignal vernünftig zu berechnen. Ein wichtiger Term bei der Betrachtung des Sensors ist die Strömungsgeschwindigkeit u, bzw. das Geschwindigkeitsprofil über der Sensoranordnung respektive den dieser zugehörigen Sensoren. Diese bestimmt im Wesentlichen die Dicke der thermischen Grenzschicht, unter welcher die Höhe, in der die Temperatur im Gas von der Temperatur des Heizelements oder einer anderen geheizten Fläche auf 99% der Gastemperatur fällt, zu verstehen ist. Die Dicke ist dabei von der Gasmischung bzw. Gaszusammensetzung und von der Strömungsgeschwindigkeit abhängig. Strömt das Gas schneller, reduziert sich die Dicke der Temperaturgrenzschicht entsprechend. Die Lösung der Differentialgleichung (i) führt dann zu einem Ausdruck, in dem weitere Gasparameter wie beispielsweise die Viskosität enthalten sind. Damit beinhaltet das Ausgangssignal thermischer Strömungssensoren eine Vielzahl von Gasparametern, die in komplexer Weise im Zusammenhang stehen. Es ist nicht möglich, über die Bestimmung einzelner oder mehrerer Parameter, wie der Wärmeleitfähigkeit λ, der Diffusivität a, der Dichte p oder anderer physikalischer Parameter auf das Verhalten des Ausgangssignals bei Änderung der Gasmischung bzw. Gaszusammensetzung zu schließen und die einzelnen gemessen Gasparameter zu dieser in Korrelation zu setzen. Stehen zum Beispiel Informationen über Wärmeleitfähigkeit λ und die Diffusivität a zur Verfügung, kann das Ausgangssignal der Sensoranordnung unter Durchfluss nicht eindeutig unter Zuhilfenahme dieser Größen korrigiert werden, da z.B. nichtlineare Effekte der Viskosität bei unterschiedlichen Strömungsgeschwindigkeiten u zu unterschiedlichen Messeffekten führen würden.

EP 2 381 248 A1 offenbart ein System zur Messung eines Gasflusses mit einer Korrektur der thermischen Diffusivität des zu vermessenden Gases bzw. Gasgemischs. Das System umfasst im Wesentlichen ein Heizelement, ein Messelement zur Ermittlung der thermischen Leitfähigkeit des zu vermessenden Gases sowie ein Mittel zur Ermittlung der thermischen Diffusivität des zu vermessenden Gases. Das Messprinzip beruht darauf, dass Messungen bei unterschiedlichen Betriebszuständen des Heizelements, das heißt bei unterschiedlichen Temperaturen des zu vermessenden Gasgemischs durchgeführt werden, wobei die Messungen jeweils bei einem Nulldurchfluss, das heißt im Wesentlichen bei stehendem Gas durchgeführt werden. Dies ist insofern problematisch, da eine Gasdurchflussmenge von Null schwer zu realisieren ist und Messungen bei von Null abweichenden Durchflussmengen verfälscht werden. Demzufolge ist das dort vorgeschlagene Messprinzip im Hinblick auf die praktische Anwendung wenig zufriedenstellend.

Der Erfindung liegt das Problem zugrunde, ein, insbesondere auch bei unbekannter Gasmischung, verbessertes Verfahren zum Messen einer Durchflussmenge eines strömenden Gases anzugeben.

Das Problem wird erfindungsgemäß durch ein Verfahren zum Messen einer Durchflussmenge eines strömenden Gases, insbesondere eines Masse- oder Volumenflusses eines Gases, mittels eines Durchflussgeräts, umfassend wenigstens eine wenigstens eine Messstrecke aufweisende Sensoranordnung mit wenigstens einem gasstromaufwärts und wenigstens einem gasstromabwärts angeordneten Sensor, über welche Sensoranordnung das zu vermessende Gas geführt wird, wobei unter konstantem Durchfluss des Gases über eine Recheneinrichtung zur Berechnung der Durchflussmenge von der wenigstens einen Sensoranordnung gelieferte und ein Maß für die Durchflussmenge darstellende Ausgangssignale, welche eine Funktion verschiedener Parameter des Gases und der Komponenten des Durchflussmessgeräts darstellen, zu einem ein Maß für die Durchflussmenge angebenden Messergebnis verarbeitet werden, wobei von der Recheneinrichtung aus den Parametern der Ausgangssignale gleichartige, nicht lineare oder voneinander unabhängige Parameter ausgewählt und in ein Verhältnis gesetzt werden, aus welchem Verhältnis unter Rückgriff auf eine mit der Recheneinrichtung verbundene Datenbank enthaltend Daten vorgegebener Gasmischungen qualitativ oder quantitativ die Gasmischung ermittelt wird, in Abhängigkeit welcher Gasmischung das von der Recheneinrichtung errechnete, ein Maß für die Durchflussmenge angebende Messergebnis des Gasflusses unter Berücksichtigung der Gasmischung korrigiert wird, gelöst.

Das erfindungsgemäße Prinzip stellt eine neuartige Lehre vor, die Durchflussmenge eines strömenden Gases, das heißt insbesondere dessen Masse- oder Volumenfluss, auch bei unbekannter Gasmischung, das heißt bei einem Gasgemisch, welches wenigstens zwei unbekannte unterschiedliche Gaskomponenten in gegebenenfalls ebenso unbekannten unterschiedlichen Anteils- bzw. Mengenverhältnissen bzw. Konzentrationen enthält, genau zu bestimmen, mithin also die durch die Gasmischung bzw. Gaszusammensetzung entstehenden Messungenauigkeiten zu korrigieren. Unter Gasmischung kann gegebenenfalls auch eine Gaszusammensetzung oder entsprechende, auf bestimmte Gasmischungen bezogene Kalibrierwerte, bei welchen gegebenenfalls die Gaszusammensetzung als Information nicht mehr notwendig ist, verstanden werden. Dabei geht das erfindungsgemäße Verfahren davon aus, gleichartige, unter Durchfluss voneinander nichtlinear abhängige bzw. bevorzugt physikalisch voneinander unabhängige Messparameter bzw. Messgrößen zu erzeugen, welche im weiteren in eine bestimmte mathematische Beziehung, das heißt insbesondere ein Verhältnis gesetzt werden. Derart werden auf mathematisch einfache Weise bestimmte Parameter der Ausgangssignale der Sensoranordnung(en), welche in Abhängigkeit der Gasmischung bzw. Gaszusammensetzung unverändert bleiben, eliminiert bzw. ausgeblendet, das heißt, es werden nur die Anteile bzw. Parameter aus den ursprünglichen Ausgangssignalen berücksichtigt, anhand welcher sich auf die Gasmischung bzw. Gaszusammensetzung schließen lässt. Bei den ausgewählten, voneinander nichtlinear abhängigen bzw. voneinander unabhängigen Messparametern kann es sich um direkt aus dem Ausgangssignal entnehmbare oder indirekt aus dem Ausgangssignal entnehmbare Parameter handeln.

Die Ausgangssignale der Sensoranordnung(en) sind eine Funktion folgender Parameter: Durchfluss Q, Temperatur $T_H$ eines auf der Messstrecke angeordneten Heizelements, Temperatur $T_G$ des Gases, Abstand I der Sensoren relativ zu dem Heizelement, Strömungsgeschwindigkeit u des Gases sowie insbesondere der Gasmischung bzw. Gaszusammensetzung. Typischerweise werden während der Messungen der Abstand I der Sensoren sowie die Temperaturen des Heizelements und des Gases $T_H$, $T_G$ im Wesentlichen konstant gehalten, so dass bei bekannter Gasmischung bzw. Gaszusammensetzung auf einfache Weise auf die Durchflussmenge geschlossen werden kann. Das erfindungsgemäße Messverfahren lässt sich jedoch gerade auch bei unbekannter Gasmischung bzw. Gaszusammensetzung anwenden.

Das erfindungsgemäße Messprinzip beruht auf einem konstanten Durchfluss Q bzw. Volumendurchfluss respektive bevorzugt einer konstanten Strömungsgeschwindigkeit u des zu vermessenden Gases.

Dabei ist eine qualitative Ermittlung einer Gasmischung insbesondere für komplexe Gasmischungen, das heißt Gasmischungen mit einer Vielzahl unterschiedlicher Bestandteile bzw. Gaskomponenten, möglich. In diesem Fall kann qualitativ ermittelt werden, welche Gaskomponenten überhaupt bzw. (haupt)anteilsmäßig in der jeweiligen Gasmischung enthalten sind. Bereits aus der qualitativen Ermittlung einer Gasmischung lassen sich regelmäßig physikalische Eigenschaften des jeweiligen Gasgemisches ableiten. Hierzu zählen insbesondere die im Rahmen der Messung von Gasdurchflussmengen besonders relevanten thermischen Eigenschaften eines Gases.

Sofern einfache Gasmischungen, das heißt etwa aus nur zwei Gaskomponenten bestehende Gasmischungen vorliegen, ist gegebenenfalls auch eine quantitative Ermittlung der Gasmischung möglich. Es kann also gegebenenfalls festgestellt werden, welche Gaskomponenten in welchen Anteilsverhältnissen in der jeweiligen Gasmischung vorliegen.

Es werden im Rahmen der Durchführung des erfindungsgemäßen Verfahrens bevorzugt zwei Sensoranordnungen, umfassend jeweils zwei symmetrisch zu einem Heizelement zur Erwärmung des Gases angeordnete Sensoren verwendet, wobei die Sensoren der Sensoranordnungen unterschiedliche Abstände zum Heizelement aufweisen.

Das Heizelement ist vorteilhaft auf der Messstrecke angeordnet und über eine Steuereinrichtung regelbar bzw. einstellbar, wobei die Steuereinrichtung das Heizelement bevorzugt so regelt bzw. ansteuert, dass entweder die Temperatur des Heizelements oder der Leistungsabfall über diesem während der Messung konstant bleibt.

Grundsätzlich ist es denkbar, Messungen im Rahmen des erfindungsgemäßen Verfahrens bei unterschiedlichen Betriebszuständen der Heizelemente, das heißt bei unterschiedlichen Temperaturen des zu vermessenden Gasgemischs durchgeführt werden. Sonach kann beispielsweise eine erste Messreihe bei einem ersten Betriebszustand der Heizelemente, in welchem diese auf eine erste Temperatur geheizt werden und eine zweite oder weitere Messreihe bei einem zweiten Betriebszustand der Heizelemente, in welchem diese auf eine zweite Temperatur geheizt werden, durchgeführt werden. In allen Fällen bleibt vorzugsweise die Temperatur des Heizelements oder der Leistungsabfall über diesem während der jeweiligen Messung bzw. Messreihe konstant. Als nichtlineare oder voneinander unabhängige Parameter werden hier die Abstände I der Sensoren der Sensoranordnungen relativ zu dem Heizelement verwendet. Aufgrund der unterschiedlich bezüglich des Heizelements angeordneten Sensoren der Sensoranordnungen werden unterschiedliche Ausgangssignale $DT_1$ bzw. $DT_2$ erzeugt. Dies lässt sich mathematisch in folgendem Term (iii) ausdrücken:

$$\frac{DT_1}{DT_2} = f\left(\frac{l_1}{l_2}\right) \text{ (iii)}$$

In Abhängigkeit der Gasmischung bzw. Gaszusammensetzung ergibt sich ein bestimmtes Verhältnis zwischen den Ausgangssignalen der jeweiligen Sensoranordnungen $DT_1$ und $DT_2$, das heißt, das Verhältnis zwischen $DT_1$ und $DT_2$ ändert sich mit der Gasmischung bzw. Gaszusammensetzung, so dass über die Verhältnisbetrachtung gemäß Term (iii) unter Rückgriff auf eine mit der Recheneinrichtung verbundene Datenbank enthaltend Daten, das heißt entsprechende Verhältnisse vorgegebener Gasmischung bzw. Gaszusammensetzungen, qualitativ die Gasmischung bzw. Gaszusammensetzung des strömenden Gases ermittelbar ist. Die derart ermittelte Gasmischung bzw. Gaszusammensetzung wird zur Korrektur des Messergebnisses der Durchflussmenge verwendet.

Es wird dabei angenommen, dass die strömungsbehaftete Temperaturausbreitung auf der beispielsweise als Membran ausgebildeten Messstrecke eine nichtlineare Funktion ist, die stark von der Gasmischung bzw. Gaszusammensetzung des zu messenden Gases abhängt, was dazu führt, dass eine Änderung der Gasmischung bzw. Gaszusammensetzung zu einer geänderten Temperaturausbreitung führt, so dass es möglich ist, voneinander unabhängige Parameter zu erzeugen.

Neben der Verwendung eines Messaufbaus mit wenigstens zwei Sensoranordnungen, umfassend jeweils zwei symmetrisch zu einem Heizelement angeordnete Sensoren, wobei die Sensoren der Sensoranordnungen unterschiedliche Abstände I zum Heizelement aufweisen, ist es alternativ oder ergänzend auch denkbar, eine Sensoranordnung zu verwenden, bei welcher die Sensoren unterschiedlichen Strömungsgeschwindigkeiten u des Gases ausgesetzt sind. Als nichtlineare oder unabhängige Parameter werden hier die mit den entsprechenden Sensoren jeweils gemessenen Strömungsgeschwindigkeiten u oder ein Maß für die Strömungsgeschwindigkeiten darstellende Parameter verwendet. Letztere ergeben sich beispielsweise aus dem Verhältnis des konstant gehaltenen Durchflusses Q und der jeweiligen Querschnittsfläche A einer als Messkanal ausgeführten Messstrecke. Es gilt Term (iv):

$$\frac{DT_1}{DT_2} = f\left(\frac{u_1}{u_2}\right) \text{ (iv)}$$

Die Bestimmung des Verhältnisses beruht hier auf geänderten Wärmeübergangsprozessen bedingt durch unterschiedlich ausgeprägte Geschwindigkeitsprofile, welche wiederum nichtlinear miteinander korrelieren und so zu unabhängigen Parametern führen.

Daneben betrifft die vorliegende Erfindung ein Durchflussmessgerät zum Messen der Durchflussmenge eines strömenden Gases, insbesondere eines Masse- oder Volumenflusses eines Gases, ausgebildet zur Durchführung des beschriebenen Verfahrens. Das Durchflussmessgerät umfasst wenigstens eine Messstrecke mit wenigstens einer wenigstens einen gasstromaufwärts und wenigstens einen gasstromabwärts angeordneten Sensor umfassenden Sensoranordnung, über welche Sensoranordnung das zu vermessende Gas geführt wird, sowie ein symmetrisch zwischen den Sensoren der Sensoranordnung angeordnetes Heizelement und eine mit den Sensoren zur Aufnahme der sensoranordnungsseitig gelieferten Ausgangssignale verbundene Recheneinrichtung zur Ermittlung eines ein Maß für die Durchflussmenge angebenden Messergebnisses, sowie eine der Recheneinrichtung zugeordnete Datenbank enthaltend Daten vorgegebener Gasmischungen bzw. Gaszusammensetzungen.

Das erfindungsgemäße Durchflussmessgerät ermöglicht es auf einfache Weise, die Durchflussmenge eines strömenden Gases genau zu bestimmen, wobei insbesondere bei Messung einer Durchflussmenge von Gasen unbekannter Zusammensetzung eine Korrektur der von den Sensoren der Sensoranordnung(en) gelieferten Messsignale möglich ist. Die Messstrecke kann, wie im Weiteren erläutert wird, membranartig oder messkanalartig ausgebildet sein. Bevorzugt umfassen die Sensoren jeweils mäanderartige bzw. mäanderartig angeordnete Messelemente bzw. Messstreifen, z. B. in Form von Thermosäulen oder dergleichen.

Das erfindungsgemäße Durchflussmessgerät kann zwei Sensoranordnungen, umfassend jeweils zwei symmetrisch zu einem Heizelement angeordnete Sensoren, wobei die Sensoren der Sensoranordnungen unterschiedliche Abstände zum Heizelement aufweisen, umfassen. Entsprechend sind die Sensoren einer ersten Sensoranordnung in einem ersten Abstand symmetrisch zum Heizelement und die Sensoren einer zweiten oder weiteren Sensoranordnung in einem zweiten oder weiteren, zum ersten Abstand unterschiedlichen Abstand symmetrisch zum Heizelement angeordnet. Dabei sind die Abstände der den Sensoranordnungen zugehörigen Sensoren so gewählt, dass die jeweiligen Sensoranordnungen bedingt durch die unterschiedlichen Abstände der Sensoren zum Heizelement unterschiedliche Ausgangssignale liefern. In einer konkreten Ausführungsform sind die Sensoren einer ersten Sensoranordnung näher zum Heizelement und die Sensoren einer zweiten Sensoranordnung weiter vom Heizelement weg angeordnet. Entsprechend führen derart im Rahmen des erfindungsgemäßen Verfahrens die Abstände der Sensoren der Sensoranordnungen zu dem Heizelement zu nichtlinearen oder unabhängigen Parametern respektive werden die Abstände der Sensoren der Sensoranordnungen zu dem Heizelement als nichtlineare oder unabhängige Parameter verwendet.

Alternativ oder ergänzend kann das Durchflussmessgerät eine Messstrecke mit einem Messkanal mit wenigstens zwei unterschiedlichen Querschnittsgeometrien bzw. Querschnittsflächen aufweisen, wobei eine erste Sensoranordnung in einem Bereich mit einer ersten Querschnittsgeometrie bzw. ersten Querschnittsfläche und eine in Reihe zu der ersten Sensoranordnung angeordnete, zweite Sensoranordnung in einem Bereich mit einer zweiten, zur ersten Querschnittsgeometrie bzw. Querschnittsfläche unterschiedlichen, das heißt reduzierten oder vergrößerten Querschnittsgeometrie bzw. Querschnittsfläche angeordnet ist. Derart ist es möglich, dass die Strömungsgeschwindigkeit eines über die erste Sensoranordnung und die zweite Sensoranordnung strömenden Gases unterschiedlich ist. Entsprechend werden in dieser Ausführungsform zur Bestimmung der Gasmischung bzw. Gaszusammensetzung als nichtlineare oder unabhängige Parameter die Strömungsgeschwindigkeit u oder ein Maß für die Strömungsgeschwindigkeiten darstellende Parameter verwendet. Im letzteren Fall ergibt sich die Strömungsgeschwindigkeit u indirekt aus dem Quotienten der bekannten Querschnittsfläche Q bzw. Querschnittsgeometrie und dem bekannten bzw. konstanten Durchfluss Q des strömenden Gases. Der Übergang zwischen den einzelnen Querschnittsgeometrien innerhalb der kanalartigen Messstrecke kann stufenweise oder fließend ausgebildet sein.

Dabei weist bevorzugt die Querschnittsfläche des Messkanals im Bereich der ersten Sensoranordnung, das heißt insbesondere im Bereich über der ersten Sensoranordnung, im Vergleich zum Bereich der zweiten Sensoranordnung, das heißt insbesondere im Bereich über der zweiten Sensoranordnung, eine unterschiedliche Breite, jedoch die gleiche Höhe auf. Mithin unterscheiden sich die jeweiligen Querschnittsgeometrien im Bereich der ersten und der zweiten Sensoranordnungen bevorzugt nur in der querschnittlich betrachteten Breite, wobei die erste Querschnittsgeometrie in der Regel breiter als die zweite Querschnittsgeometrie ist, so dass - unter konstantem Durchfluss des strömenden Gases - das Gas mit einer im Vergleich höheren Strömungsgeschwindigkeit durch die zweite Querschnittsgeometrie strömt. Bleibt die Geschwindigkeit unter der kritischen Reynoldszahl, bleibt das Strömungsprofil gleich.

Die Querschnittsflächen sind vorteilhaft derart ausgebildet, dass wenigstens im Bereich der Sensoranordnung(en) eine laminare Strömung des Gases vorliegt. Mithin treten in diesem Bereich keine Turbulenzerscheinungen auf, das Gas strömt im Wesentlichen in Schichten, die sich nicht vermischen. Gegebenenfalls liegt eine stationäre Strömung des Gases wenigstens im Bereich der Sensoranordnungen vor. Auf diese Weise kann die Aussagekraft der Ausgangssignale der Sensoranordnungen respektive der Messung verbessert werden.

In einer weiteren Ausführungsform des erfindungsgemäßen Durchflussmessgeräts ist es möglich, dass mindestens ein Messkanal der Sensoranordnung in einem Teilstrom des durch das Durchflussmessgerät strömenden Gasstroms angeordnet ist. Mithin gibt es eine Vielzahl an prinzipiell denkbaren Anordnungsmöglichkeiten des Messkanals, so dass das erfindungsgemäße Durchflussmessgerät in konstruktiver Hinsicht variabel gestaltet und so an unterschiedliche Einbausituationen angepasst bzw. für diese konzipiert werden kann.

Gleichermaßen sind in dem Teilstrom die Strömungsverhältnisse bzw. das Strömungsverhalten des durch das Durchflussmessgerät strömenden Gases, insbesondere im Hinblick auf eine laminare Strömung, gegebenenfalls besser kontrollierbar.

Weitere Vorteile, Merkmale und Einzelheiten der Erfindung ergeben sich aus dem im Folgenden beschriebenen Ausführungsbeispiel sowie anhand der Zeichnungen. Dabei zeigen:

Fig. 1      eine Prinzipdarstellung eines erfindungsgemäßen Durchflussmessgeräts;

Fig. 2      eine Prinzipdarstellung eines Ausschnitts aus einem erfindungsgemäßen Durchflussmessgerät gemäß einer ersten Ausführungsform;

Fig. 3      ein Diagramm zur Veranschaulichung der Unterschiede der Ausgangssignale DT einer Sensoranordnung für unterschiedliche Gase;

Fig. 4      ein Diagramm zur Veranschaulichung der Unterschiede der Ausgangssignale DT einer Sensoranordnung für unterschiedliche Sensorabstände zu einem Heizelement;

Fig. 5      ein Diagramm zur Veranschaulichung der Unterschiede der Ausgangssignale zweier Sensoranordnungen für zwei unterschiedliche Gasmischungen bzw. Gaszusammensetzungen und zwei unterschiedliche Abstände der der jeweiligen Sensoranordnung zugehörigen Sensoren relativ zu einem Heizelement;

Fig. 6      eine Prinzipdarstellung des erfindungsgemäßen Verfahrens;

Fig. 7      eine Prinzipdarstellung einer Aufsicht auf einen Ausschnitt aus einem erfindungsgemäßen Durchflussmessgerät gemäß einer zweiten Ausführungsform; und

Fig. 8      ein Diagramm zur Veranschaulichung der Unterschiede des Ausgangssignals DT einer Sensoranordnung für zwei unterschiedliche Strömungsgeschwindigkeiten $u_1$, $u_2$.

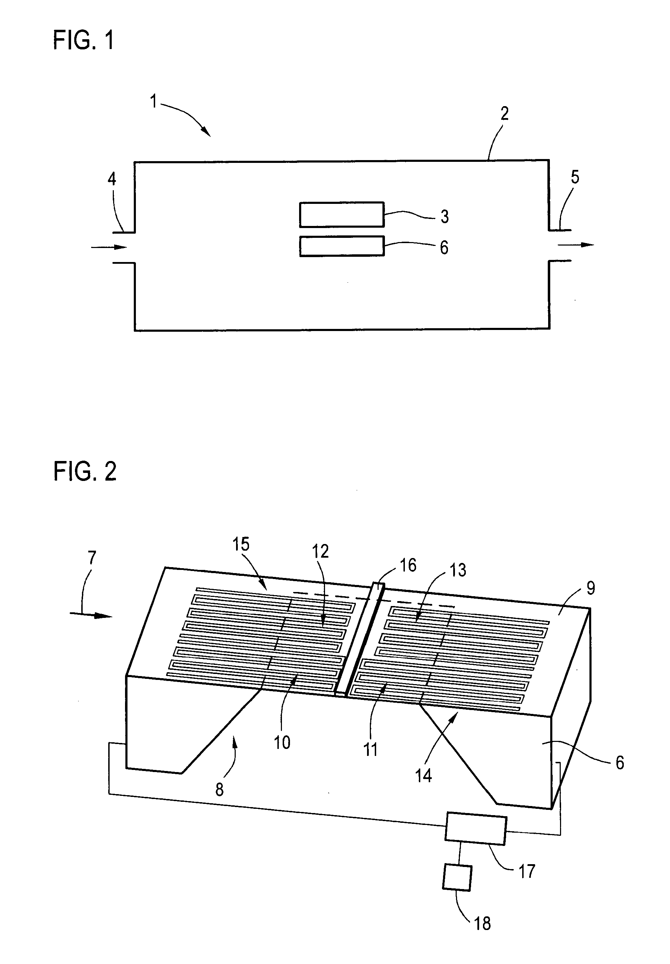

Fig. 1 zeigt eine Prinzipdarstellung eines erfindungsgemäßen Durchflussmessgeräts 1. Das Durchflussmessgerät 1 umfasst ein Gehäuseteil 2, an dessen Vorderseite sich eine Anzeigeeinrichtung 3 zur Anzeige von Durchflussmesswerten bzw. Verbrauchsmesswerten befindet. Das Durchflussmessgerät 1 dient der Messung der Durchflussmenge eines mit konstantem Durchfluss Q strömenden Gases, insbesondere eines Masse- oder Volumenflusses des Gases.

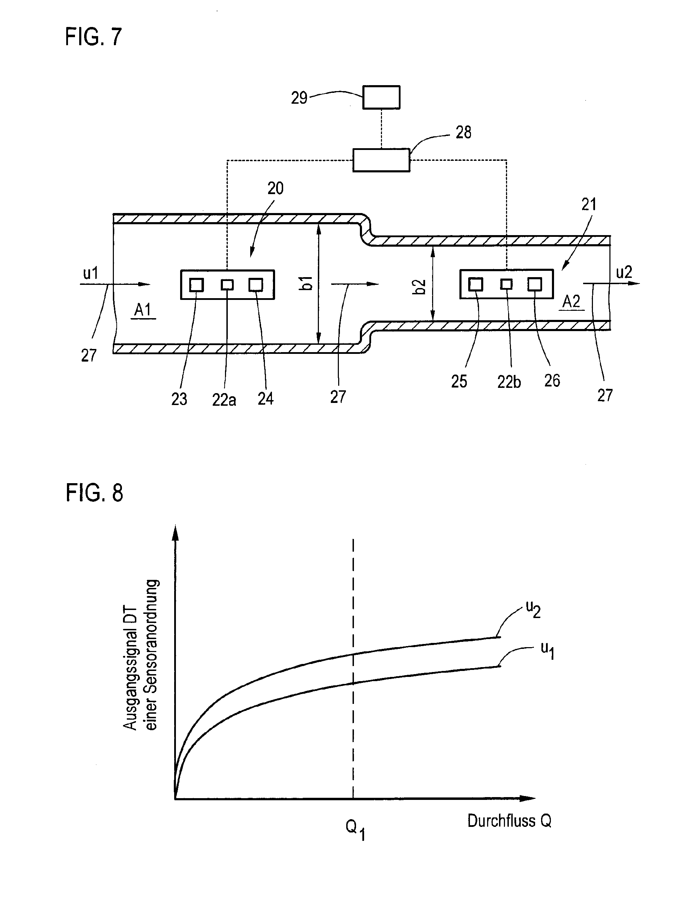

Am Gehäuseteil 2 ist ein erster Anschlussstutzen 4, an dem eine als Gaseinlass dienende Gaszufuhrleitung anzuschließen ist, sowie ein zweiter Anschlussstutzen 5, an dem eine als Gasauslass dienende Gasabfuhrleitung anzuschließen ist, ausgebildet. Gaseinlass und Gasauslass sind über die jeweiligen Pfeile dargestellt. Innerhalb des Gehäuseteils 2 ist eine von dem Gas durch- bzw. überströmte, in Fig. 2 bzw. 7 näher gezeigte Messstrecke 6 ausgebildet.

Fig. 2 zeigt eine Prinzipdarstellung eines Ausschnitts aus einem erfindungsgemäßen von einem Gas durchströmbaren Durchflussmessgerät 1 gemäß einer ersten Ausführungsform. Wie erwähnt, dient das Durchflussmessgerät 1 im Rahmen der Durchführung des erfindungsgemäßen Verfahrens der Messung der Durchflussmenge eines mit konstantem Durchfluss Q strömenden Gases, insbesondere eines Masse- oder Volumenflusses des Gases. Das Gas strömt, wie durch den Pfeil 7 angedeutet über die membranartige Messstrecke 6, welche beispielsweise aus einem Siliziummaterial mit einer darin durch Ätzen erzeugten Ausnehmung 8 gebildet ist. Auf der die Oberseite der Messstrecke 6 bildenden Membran 9 sind zwei jeweils einen gasstromaufwärts angeordneten Sensor 10, 11 und wenigstens einen gasstromabwärts angeordneten Sensor 12, 13 umfassende Sensoranordnungen 14, 15 angeordnet. Mithin sind der in Fig. 1 gezeigten unteren Sensoranordnung 14 der gasstromaufwärts angeordnete Sensor 10 sowie der gasstromabwärts angeordnete Sensor 11 und entsprechend der in Fig. 1 gezeigten oberen Sensoranordnung 15 der gasstromaufwärts angeordnete Sensor 12 sowie der gasstromabwärts angeordnete Sensor 13 zugehörig. Die Sensoren 10 - 13 sind jeweils aus mäanderartig auf der Membran 9 angeordneten Messstreifen, z. B. in Form von Thermosäulen, gebildet.

Auf der Messstrecke 6 respektive der Membran 9 ist symmetrisch zu den Sensoren 10 - 13 ein beispielsweise als Widerstandsheizung ausgebildetes Heizelement 16 angeordnet. Das Heizelement 16 erwärmt sowohl das strömende Gas als auch die Membran 9.

Ersichtlich weisen die Sensoren 10, 11 der Sensoranordnung 14 einen anderen Abstand I zum Heizelement 16 auf als die Sensoren 12, 13 der Sensoranordnung 15, das heißt, die Sensoren 10, 11 der Sensoranordnung 14 sind im Vergleich näher zu dem Heizelement 16 angeordnet als die Sensoren 12, 13 der Sensoranordnung 15. Der Abstand der Sensoren 10, 11 der Sensoranordnung 14 zum Heizelement wird als $I_1$ und der Abstand der Sensoren 12, 13 der Sensoranordnung 15 als $I_2$ bezeichnet, wobei gilt $I_1 < I_2$. Weitere, gegebenenfalls zusätzlich auf der Membran 9 angeordnete Funktionselemente des Durchflussmessgeräts 1 sind aus Gründen der Übersichtlichkeit nicht gezeigt.

Die von den Sensoranordnungen 14, 15 gelieferten Ausgangssignale $DT_{14}$ bzw. $DT_{15}$ ergeben sich aus der Differenz des Sensorsignals $S_{11}$, $S_{13}$ des jeweiligen gasstromabwärts angeordneten Sensors 11, 13 und des von dem jeweiligen gasstromaufwärts angeordneten Sensor 10, 12 gelieferten Sensorsignals $S_{10}$, $S_{12}$. Es gilt:

$$DT_{14} = S_{11} - S_{10}$$

$$DT_{15} = S_{13} - S_{12}$$

Die Sensorsignale $S_{10}$, $S_{11}$, $S_{12}$, $S_{13}$ respektive die Ausgangssignale $DT_{14}$, $DT_{15}$ werden in einer mit den Sensoranordnungen 14, 15 verbundenen Recheneinrichtung 17 erfasst bzw. ermittelt und in ein Maß für die Durchflussmenge des strömenden Gases angebendes Messergebnis umgewandelt. Dabei sind die Sensorsignale $DT_{14}$ bzw. $DT_{15}$ eine Funktion folgender Parameter: Volumendurchfluss Q, Temperatur des Gases $T_G$, Temperatur des Heizelements 16 $T_H$, Abstand I der Sensoren 10, 11 bzw. 12, 13 zum Heizelement 16, Strömungsgeschwindigkeit u des Gases sowie der Gasmischung bzw. Gaszusammensetzung. Das derart ermittelte Messergebnis kann, wie eingangs beschrieben, bei unbekannter Gasmischung bzw. unbekannter Gaszusammensetzung fehlerbehaftet sein.

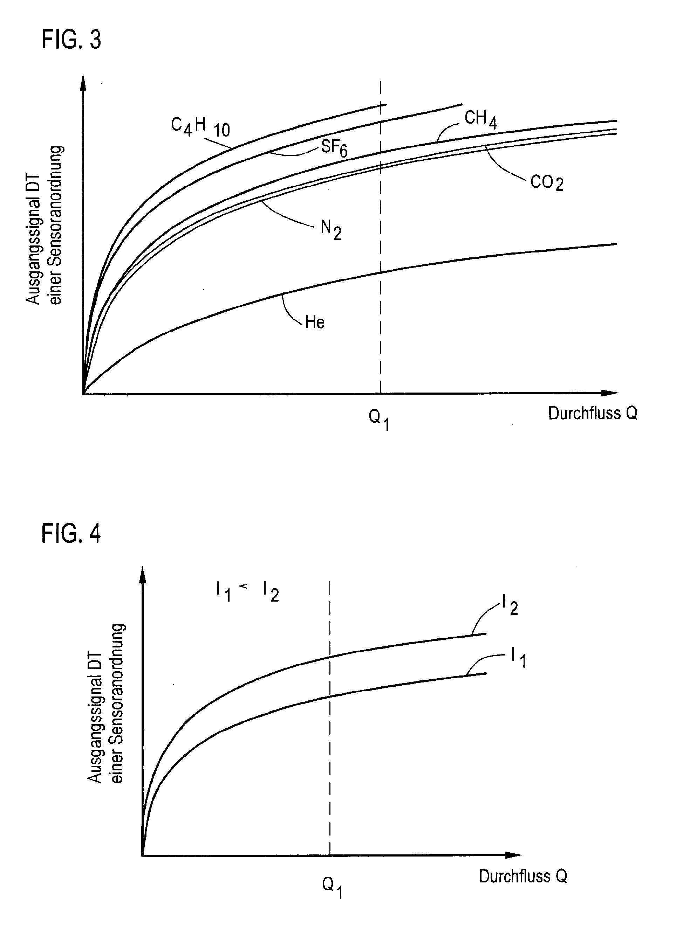

Aus Fig. 3, welche die Ausgangssignale DT einer beispielhaften Sensoranordnung, das heißt etwa der in Fig. 2 gezeigten Sensoranordnung 14 oder 15, in Abhängigkeit des Durchflusses Q darstellt, ist der Einfluss der Gasmischung bzw. Gaszusammensetzung auf die Ausgangssignale DT einer Sensoranordnung erkennbar. Gezeigt sind Graphen für die Verläufe unterschiedlicher Gase. Ersichtlich ist bei konstantem, der strichlinierten Linie entsprechendem Durchfluss $Q_1$ das Ausgangssignal DT der Sensoranordnung für reines Butan ($C_4H_{10}$) deutlich höher als für alle anderen in Fig. 2 dargestellten Gase wie Schwefelhexafluorid ($SF_6$), Methan ($CH_4$), Kohlendioxid ($CO_2$), Stickstoff ($N_2$) und insbesondere Helium (He). Entsprechend ist zu erwarten, dass das Ausgangssignal DT einer Sensoranordnung für ein Butan oder Schwefelhexafluorid enthaltendes Gas bzw. Gasgemisch regelmäßig höher ist als für ein Helium enthaltendes Gas bzw. Gasgemisch, so dass für eine möglichst exakte Bestimmung des ein Maß für die Durchflussmenge darstellenden Messergebnisses in Abhängigkeit der Gasmischung bzw. Gaszusammensetzung eine Korrektur respektive ein mit dem Ausgangssignal DT zu verrechnender Korrekturfaktor K erforderlich ist, da etwa Gase z.B. mit Anteilen an Butan grundsätzlich höhere Ausgangssignale DT liefern, was jedoch nicht zwingend mit einer erhöhten Durchflussmenge des Gases korrelieren muss.

Anhand von Fig. 4, welche die Ausgangssignale DT einer beispielhaften Sensoranordnung, etwa der in Fig. 1 gezeigten Sensoranordnung 14 oder 15 in Abhängigkeit des Durchflusses Q darstellt, ist der Einfluss des Abstandes I der der Sensoranordnung zugehörigen, symmetrisch zu einem Heizelement angeordneten Sensoren, das heißt beispielsweise der Sensoren 10, 11 der Sensoranordnung 14, auf die Ausgangssignale DT der Sensoranordnung erkennbar. Wiederum ausgehend von einem konstanten, durch die strichlinierte Linie gekennzeichneten Durchfluss $Q_1$, liefert eine Sensoranordnung mit einem im Vergleich größeren Abstand $I_2$ der dieser zugehörigen Sensoren zum Heizelement ein höheres Ausgangssignal DT als eine Sensoranordnung mit einem im Vergleich geringeren Abstand $I_1$ der dieser zugehörigen Sensoren zum Heizelement.

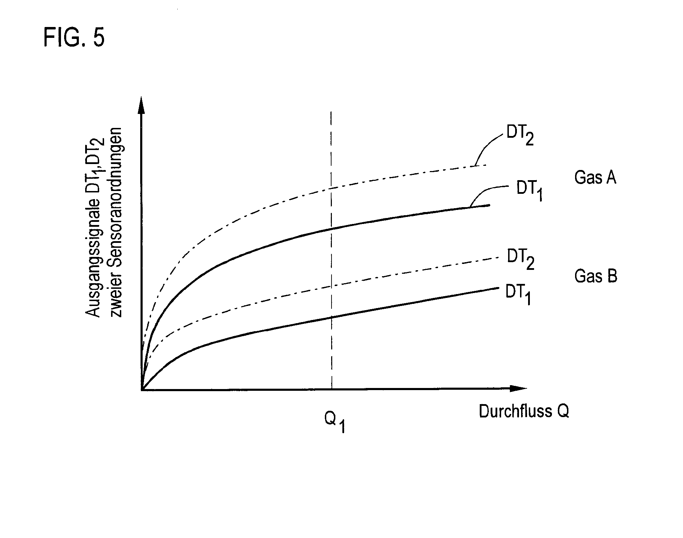

Anhand von Fig. 5, welche die Ausgangssignale $DT_1$, $DT_2$ zweier beispielhafter Sensoranordnungen, das heißt beispielsweise der in Fig. 2 gezeigten Sensoranordnungen 14, 15 in Abhängigkeit des Durchflusses Q zeigt, wobei sich die Sensoranordnungen in dem Abstand I der ihnen jeweils zugehörigen Sensoren zu einem Heizelement unterscheiden, lässt sich folgendes erkennen. Der durchgezogene Graph stellt jeweils die Ausgangssignale $DT_1$ der Sensoranordnung, deren Sensoren einen geringeren Abstand $I_1$ zum Heizelement und der strichpunktiert gezeichnete Graph die Ausgangssignale $DT_2$ der Sensoranordnung, deren Sensoren einen größeren Abstand $I_2$ zum Heizelement aufweisen, dar. Gezeigt ist zusätzlich der Einfluss unterschiedlicher Gasgemische A, B auf die jeweiligen Ausgangssignale $DT_1$, $DT_2$ der Sensoranordnungen. Die oberen beiden Graphen könnten zum Beispiel die jeweiligen Ausgangssignale $DT_1$, $DT_2$ der Sensoranordnungen für ein Gasgemisch A ohne bzw. mit einem geringen Heliumanteil darstellen, wohingegen die beiden unteren Graphen entsprechende Ausgangssignale $DT_1$, $DT_2$ der Sensoranordnungen für ein Gasgemisch B mit einem merklichen Heliumanteil darstellen könnten. Gleichermaßen könnten die beiden unteren Graphen die jeweiligen Ausgangssignale $DT_1$, $DT_2$ der Sensoranordnungen für ein Gasgemisch A ohne bzw. mit einem geringen Butananteil darstellen, wohingegen die beiden oberen Graphen die entsprechenden Ausgangssignale $DT_1$, $DT_2$ der Sensoranordnungen für ein Gasgemisch B mit einem merklichen Butananteil darstellen. Die Gasgemische A, B respektive die Zusammensetzungen der Gasgemische, das heißt die Zusammensetzungen der Gasgemische A, B sind jedoch unbekannt.

In Abhängigkeit der Zusammensetzung der Gasgemische A, B ändern sich in der Folge, wie mit Bezug auf Fig. 3 erläutert, beispielsweise bei Betrachtung eines durch die strichlinierte Linie dargestellten, festen Durchflusses $Q_1$ des Gases auch die jeweiligen Verhältnisse der Ausgangssignale $DT_1$, $DT_2$ der beiden Sensoranordnungen.

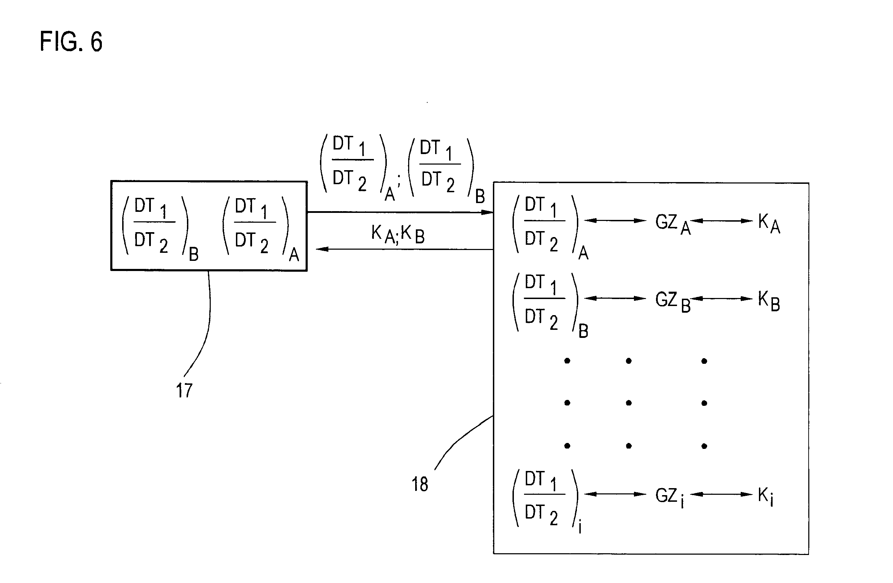

Fig. 6 zeigt eine Prinzipdarstellung des Ablaufs des erfindungsgemäßen Verfahrens Bezug nehmend auf das Diagramm in Fig. 5 sowie das in den Fig. 1 gezeigte Durchflussmessgerät 1. Die jeweiligen Zusammensetzungen der Gasgemische A, B sind dabei, wie erwähnt, zunächst unbekannt. Die Recheneinrichtung 17 verwendet aus den Ausgangssignalen $DT_1$ bzw. $DT_2$ als nichtlineare oder unabhängige Parameter die Abstände $I_1$, $I_2$ der Sensoren 10, 11 der Sensoranordnung 14 bzw. der Sensoren 12, 13 der Sensoranordnung 15 zum Heizelement 16. Die jeweiligen von den Sensoranordnungen 14, 15 gelieferten Ausgangssignale $DT_1$ bzw. $DT_2$ werden in ein Verhältnis $DT_1/DT_2$ gesetzt, welches einer Funktion der jeweiligen Abstände $I_1$, $I_2$ entspricht (siehe obige Gleichung (iii)).

Mithin liegen in der Recheneinrichtung 17 in Abhängigkeit der Zusammensetzung der Gasgemische A, B unterschiedliche Verhältnisse $(DT_1/DT_2)_A$ bzw. $(DT_1/DT_2)_B$ der von den Sensoranordnungen 14 und 15 in Abhängigkeit der Zusammensetzung der Gasgemische A, B gelieferten Ausgangssignale $DT_1$ bzw. $DT_2$ vor.

Das Verhältnis $(DT_1/DT_2)_A$ oder $(DT_1/DT_2)_B$ wird einer mit der Recheneinrichtung 17 verbundenen Datenbank 18 zugeführt und dort entsprechend darin abgelegten, vorgegebenen Gaszusammensetzungen $GZ_i$, das heißt vorliegend der Gaszusammensetzung $GZ_A$ bzw. $GZ_B$ zugeordnet. Mithin wird die Gaszusammensetzung $GZ_A$ bzw. $GZ_B$ des jeweiligen Gasgemischs A, B aus dem Verhältnis $(DT_1/DT_2)_A$ bzw. $(DT_1/DT_2)_B$ qualitativ ermittelt. Entsprechend der jeweiligen Gaszusammensetzung $GZ_A$ bzw. $GZ_B$ des Gasgemischs A bzw. B werden der Datenbank 18 Korrekturfaktoren $K_A$ bzw. $K_B$ entnommen und der Recheneinrichtung 17 übergeben, woraufhin die Recheneinrichtung 17 das ein Maß für die Durchflussmenge angebende Messergebnis des Gasflusses unter Berücksichtigung der Gaszusammensetzung $GZ_A$ bzw. $GZ_B$ des Gasgemischs A oder B anhand des entsprechenden Korrekturfaktors $K_A$ oder $K_B$ korrigiert.

Fig. 7 zeigt eine Prinzipdarstellung einer Aufsicht auf einen Ausschnitt aus einem erfindungsgemäßen Durchflussmessgerät 1 gemäß einer zweiten Ausführungsform. Das Durchflussmessgerät 1 umfasst eine kanalartige Messstrecke 6 bzw. einen Messkanal 19. Der Messkanal 19 kann in einem Teilstrom des durch das Durchflussmessgerät 1 strömenden Gasstroms angeordnet sein.

Ersichtlich weist der Messkanal 19 zwei unterschiedliche Querschnittsgeometrien auf, das heißt der linke Bereich des Messkanals 19 hat eine Querschnittsfläche $A_1$, wohingegen der rechte Bereich des Messkanals 19 eine im Vergleich reduzierte Querschnittsfläche $A_2$ aufweist. Dabei weist die Querschnittsfläche $A_1$ des Messkanals 19 im Bereich der ersten Sensoranordnung 20 eine im Vergleich zum Bereich der zweiten Sensoranordnung 21 unterschiedliche Breite $b_1$ auf. Dies ergibt sich dadurch, dass der in Fig. 7 gezeigte linke Bereich, in dem die erste Sensoranordnung 20 angeordnet ist, breiter (vgl. Breite $b_1$) als der in Fig. 7 gezeigte rechte Bereich, in dem die zweite Sensoranordnung 21 angeordnet ist (vgl. Breite $b_2$), ist. Die Höhe der Querschnittsflächen $A_1$, $A_2$ ist in beiden Bereichen gleich.

Sonach weist das Durchflussmessgerät 1 zwei in Reihe angeordnete Sensoranordnungen 20, 21 mit jeweils einem gasstromaufwärts und einem gasstromabwärts, symmetrisch zu einen einen Teil der jeweiligen Sensoranordnungen 20, 21 bildenden Heizelement 22a, 22b beabstandeten, in Reihe angeordneten Sensor 23, 24, 25, 26 auf. Das Gas strömt in Richtung der Pfeile 27 mit konstantem Durchfluss Q durch das Durchflussmessgerät 1. Es ergibt sich wenigstens im Bereich der Sensoranordnungen 20, 21 eine durchgängig laminare Gasströmung innerhalb des Messkanals 19.

Aufgrund der Anordnung der Sensoren 23, 24 bzw. 25, 26 respektive der Sensoranordnungen 20, 21 in Bereichen unterschiedlicher Querschnittsgeometrien des Messkanals 19 strömt das Gas über die in dem rechten Bereich des Messkanals 19 mit der im Vergleich reduzierten Querschnittsgeometrie $A_2$ angeordneten Sensoren 25, 26 der Sensoranordnung 21 mit einer höheren Strömungsgeschwindigkeit $u_2$ im Vergleich zu den im linken Bereich des Messkanals 19 mit der Querschnittsgeometrie $A_1$ angeordneten Sensoren 23, 24 der Sensoranordnung 20. Es gilt also, dass die Strömungsgeschwindigkeit $u_1$ des Gases im Bereich der in Fig. 7 gezeigten linken Sensoranordnung 20 kleiner als die Strömungsgeschwindigkeit $u_2$ des Gases im Bereich der in Fig. 7 gezeigten rechten Sensoranordnung 21 ist. Dies führt dazu, dass die Sensoranordnungen 20, 21 in Abhängigkeit der Strömungsgeschwindigkeit u unterschiedliche Ausgangssignale $DT_{20}$, $DT_{21}$ liefern. Vergleiche hierzu Fig. 8, welche prinzipiell das Ausgangssignal DT einer Sensoranordnung in Abhängigkeit des Durchflusses Q für zwei unterschiedliche Strömungsgeschwindigkeiten $u_1$, $u_2$ zeigt.

Entsprechend werden im Rahmen der Ermittlung der Gasmischung bzw. Gaszusammensetzung als nichtlineare bzw. unabhängige Parameter in dieser Ausführungsform die in den jeweiligen Bereichen des Messkanals 19 mit den Querschnittsgeometrien $A_1$, $A_2$ herrschenden mittleren Strömungsgeschwindigkeiten $u_1$, $u_2$ bzw. ein Maß für die Strömungsgeschwindigkeiten $u_1$, $u_2$, welches sich aus dem Quotienten des konstanten Durchflusses Q und der jeweiligen Querschnittsfläche $A_1$ bzw. $A_2$ des Messkanals 19 ergibt, darstellende Parameter verwendet.

Gleichermaßen ist in der in Fig. 7 gezeigten Ausführungsform eine mit den Sensoranordnungen 20, 21 zur Aufnahme der Ausgangssignale $DT_{20}$, $DT_{21}$ verbundene Recheneinrichtung 28 zur Ermittlung eines ein Maß für die Durchflussmenge des strömenden Gases angebenden Messergebnisses sowie eine der Recheneinrichtung 28 zugeordnete Datenbank 29 enthaltend Daten vorgegebener Gasmischungen bzw. Gaszusammensetzungen vorgesehen. Die Gasmischung bzw. Gaszusammensetzung ergibt sich durch Zuordnung des nach obiger Gleichung (iv) erhaltenen Verhältnisses $DT_{20}/DT_{21}$ zu in der Datenbank 29 für unterschiedliche Gasmischungen bzw. Gaszusammensetzungen abgelegte Verhältnisse entsprechend des in Fig. 6 gezeigten Ablaufs. Mithin wird entsprechend der ermittelten Gasmischung bzw. Gaszusammensetzung ein Korrekturfaktor K ausgewählt, an die Recheneinrichtung 28 gegeben, und dort zur Korrektur des Messergebnisses verwendet.

Der wesentliche Unterschied zwischen den Ausführungsformen gemäß den Fig. 2 und 7 besteht demnach darin, dass die Ausführungsform gemäß Fig. 2 als nichtlineare oder voneinander unabhängige Parameter die Abstände I der Sensoren 10, 11 bzw. 12, 13 zu dem Heizelement 16 und die Ausführungsform nach Fig. 7 die von den jeweiligen Sensoranordnungen 20, 21 gemessenen Durchfluss- bzw. Strömungsgeschwindigkeiten u des Gases oder diesen entsprechende Größen verwendet werden. Die Gasmischung bzw. Zusammensetzung des strömenden Gases lässt sich in beiden Fällen im Rahmen des erfindungsgemäßen Verfahrens, wie eingangs erwähnt, qualitativ oder quantitativ ermitteln (vgl. Gleichungen (iii) und (iv)) und das Messergebnis entsprechend korrigieren.

## Patentansprüche

1. Verfahren zum Messen einer Durchflussmenge eines strömenden Gases, insbesondere eines Masse- oder Volumenflusses eines Gases, mittels eines Durchflussgeräts, umfassend wenigstens eine wenigstens eine Messstrecke aufweisende Sensoranordnung mit wenigstens einem gasstromaufwärts und wenigstens einem gasstromabwärts angeordneten Sensor, über welche Sensoranordnung das zu vermessende Gas geführt wird, wobei unter konstantem Durchfluss des Gases über eine Recheneinrichtung zur Berechnung der Durchflussmenge von der wenigstens einen Sensoranordnung gelieferte und ein Maß für die Durchflussmenge darstellende Ausgangssignale, welche eine Funktion verschiedener Parameter des Gases und der Komponenten des Durchflussmessgeräts darstellen, zu einem ein Maß für die Durchflussmenge angebenden Messergebnis verarbeitet werden, wobei von der Recheneinrichtung aus den Parametern der Ausgangssignale gleichartige, nicht lineare oder voneinander unabhängige Parameter ausgewählt und in ein Verhältnis gesetzt werden, aus welchem Verhältnis unter Rückgriff auf eine mit der Recheneinrichtung verbundene Datenbank enthaltend Daten vorgegebener Gasmischungen qualitativ oder quantitativ die Gasmischung ermittelt wird, in Abhängigkeit welcher Gasmischung das von der Recheneinrichtung errechnete, ein Maß für die Durchflussmenge angebende Messergebnis des Gasflusses unter Berücksichtigung der Gasmischung korrigiert wird.

2. Verfahren nach Anspruch 1, **dadurch gekennzeichnet, dass** wenigstens zwei Sensoranordnungen, umfassend jeweils zwei symmetrisch zu einem Heizelement angeordnete Sensoren verwendet werden, wobei die Sensoren der Sensoranordnungen unterschiedliche Abstände zum Heizelement aufweisen, wobei als nicht lineare oder unabhängige Parameter die Abstände der Sensoren der Sensoranordnungen zu dem Heizelement verwendet werden.

**3.** Verfahren nach Anspruch 1 oder 2, **dadurch gekennzeichnet, dass** eine Sensoranordnung verwendet wird, bei welcher die Sensoren unterschiedlichen Strömungsgeschwindigkeiten des Gases ausgesetzt sind, wobei als nicht lineare oder unabhängige Parameter die Strömungsgeschwindigkeiten oder ein Maß für die Strömungsgeschwindigkeiten darstellende Parameter verwendet werden.

**4.** Verfahren nach einem der vorangehenden Ansprüche, **dadurch gekennzeichnet, dass** die Sensoranordnung ein auf der Messstrecke angeordnetes, über eine Steuereinrichtung regelbares Heizelement zur Erwärmung des Gases umfasst, wobei die Steuereinrichtung das Heizelement so regelt, dass entweder die Temperatur des Heizelements oder der Leistungsabfall über diesem während der Messung konstant bleibt.

**5.** Durchflussmessgerät (1) zum Messen der Durchflussmenge eines strömenden Gases, insbesondere eines Masse- oder Volumenflusses eines Gases, ausgebildet zur Durchführung des Verfahrens nach einem der vorangehenden Ansprüche, umfassend wenigstens eine wenigstens eine Messstrecke (6) aufweisende Sensoranordnung (14, 15, 20, 21) mit wenigstens einem gasstromaufwärts und wenigstens einem gasstromabwärts angeordneten Sensor (10, 11, 12, 13, 23, 24, 25, 26), über welche Sensoranordnung (14, 15, 20, 21) das zu vermessende Gas geführt wird, sowie ein symmetrisch zwischen den Sensoren (10, 11, 12, 13, 23, 24, 25, 26) der Sensoranordnung (14, 15, 20, 21) angeordnetes Heizelement (16, 22) und eine mit den Sensoren (10, 11, 12, 13, 23, 24, 25, 26) zur Aufnahme der sensoranordnungsseitig gelieferten Ausgangssignale ($DT_{10}$, $DT_{11}$, $DT_{16}$, $DT_{17}$) verbundene Recheneinrichtung (17, 28) zur Ermittlung eines ein Maß für die Durchflussmenge angebenden Messergebnisses, sowie eine der Recheneinrichtung (17, 28) zugeordnete Datenbank (18, 29) enthaltend Daten vorgegebener Gasmischungen.

**6.** Durchflussmessgerät nach Anspruch 5, **gekennzeichnet durch** zwei Sensoranordnungen (14, 15), umfassend jeweils zwei symmetrisch zu einem Heizelement (16) angeordnete Sensoren (10, 11, 12, 13), wobei die Sensoren (10, 11, 12, 13) der Sensoranordnungen (14, 15) unterschiedliche Abstände ($l_1$, $l_2$) zu dem Heizelement (16) aufweisen.

**7.** Durchflussmessgerät nach Anspruch 6, **dadurch gekennzeichnet, dass** die Sensoren (10, 11, 12, 13) jeweils mäanderartig angeordnete Messstreifen umfassen.

**8.** Durchflussmessgerät nach einem der Ansprüche 5 bis 7, **dadurch gekennzeichnet, dass** die Messtrecke (6) einen Messkanal (19) mit wenigstens zwei unterschiedlichen Querschnittsgeometrien ($A_1$, $A_2$) aufweist, wobei eine erste Sensoranordnung (20) in einem Bereich mit einer ersten Querschnittsfläche ($A_1$) und eine in Reihe zu der ersten Sensoranordnung (20) angeordnete zweite Sensoranordnung (21) in einem Bereich mit einer zweiten, zur ersten unterschiedlichen Querschnittsfläche ($A_2$) derart angeordnet ist, dass die Strömungsgeschwindigkeit eines über die erste Sensoranordnung (20) und die zweite Sensoranordnung (21) strömenden Gases unterschiedlich ist.

**9.** Durchflussmessgerät nach Anspruch 8, **dadurch gekennzeichnet, dass** die Querschnittsgeometrie des Messkanals (19) im Bereich der ersten Sensoranordnung (20) im Vergleich zum Bereich der zweiten Sensoranordnung (21) eine unterschiedliche Breite, jedoch die gleiche Höhe aufweist.

**10.** Durchflussmessgerät nach Anspruch 8 oder 9, **dadurch gekennzeichnet, dass** die Querschnittsflächen ($A_1$, $A_2$) derart ausgebildet sind, dass wenigstens im Bereich der Sensoranordnungen (20, 21) eine laminare Strömung des Gases vorliegt.

**11.** Durchflussmessgerät nach einem der Ansprüche 5 bis 10, **dadurch gekennzeichnet, dass** die Sensoranordnung (14, 15, 20, 21) als Membran (9) oder Messkanal (19) ausgebildet ist.

**12.** Durchflussmessgerät nach einem der Ansprüche 5 bis 11, **dadurch gekennzeichnet, dass** mindestens ein Messkanal (6, 19) der Sensoranordnung (14, 15, 20, 21) in einem Teilstrom des durch das Durchflussmessgerät (1) strömenden Gasstroms angeordnet ist.

FIG. 1

FIG. 2

FIG. 3

FIG. 4

FIG. 5

## FIG. 6

$$\left(\dfrac{DT_1}{DT_2}\right)_A ; \left(\dfrac{DT_1}{DT_2}\right)_B$$

$$\left(\dfrac{DT_1}{DT_2}\right)_B \qquad \left(\dfrac{DT_1}{DT_2}\right)_A \qquad\longrightarrow$$

$$K_A ; K_B \qquad\longleftarrow$$

17

$$\left(\dfrac{DT_1}{DT_2}\right)_A \longleftrightarrow GZ_A \longleftrightarrow K_A$$

$$\left(\dfrac{DT_1}{DT_2}\right)_B \longleftrightarrow GZ_B \longleftrightarrow K_B$$

•  •  •

•  •  •

•  •  •

$$\left(\dfrac{DT_1}{DT_2}\right)_i \longleftrightarrow GZ_i \longleftrightarrow K_i$$

18

EP 2 618 115 A2

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2381248 A1

**In der Beschreibung aufgeführte Nicht-Patentliteratur**

- **U. HAMMERSCHMIDT ; V. MEIER.** New Transit Hot-Bridge Sensor to Measure Thermal Conductivity, Thermal Diffusivity, and Volumetric Specific Heat. *International Journal of Thermophysics,* Mai 2006, vol. 27 (3